# EUROPÄISCHE PATENTSCHRIFT

(11) **EP 2 093 863 B1**
(45) Veröffentlichungstag und Bekanntmachung des Hinweises auf die Patenterteilung: **20.02.2013**
(21) Anmeldenummer: 08021859.7
(22) Anmeldetag: 17.12.2008
(51) Int. Cl.: H02K 5/167, H02K 7/14

(54) **Hohlwellenmotor zur Ankopplung an einer Maschinenwelle**
Hollow shaft motor for coupling to a machine shaft
Moteur à arbre creux destiné à l'accouplement sur un arbre de machine

(30) Priorität: 22.12.2007 DE 102007062383
(43) Veröffentlichungstag der Anmeldung: 26.08.2009
(73) Patentinhaber: Robert Bosch GmbH, 70469 Stuttgart (DE)
(72) Erfinder: Gröning, Ingolf, 97816 Lohr am Main (DE); Steinbock, Stefan, 97857 Urspringen (DE)
(74) Vertreter: Thürer, Andreas

(56) Entgegenhaltungen:
- DE-A1- 4 315 826
- DE-A1- 19 706 124
- DE-A1- 19 726 017
- DE-A1-102005 035 834

## Beschreibung

Die Erfindung betrifft einen Hohlwellenmotor zur Ankopplung an die Welle einer Maschine, insbesondere einer Spritzgießmaschine gemäß den Merkmalen des unabhängigen Anspruches 1 sowie ein Verfahren zur Montage/Demontage der Vorrichtung gemäß den Merkmalen den unabhängigen Ansprüche 9 und 11.

Direktantriebe sind aus vielen Bereichen der elektrischen Automatisierungstechnik bekannt. Direktantriebe findet man beispielsweise in der Drucktechnik in Verbindung mit dem Antrieb von Druckzylindern, aber auch bei Spritzgießmaschinen und Antrieben für Extruderschnecken. Mittels der Direktantriebstechnik wird nicht nur wertvoller Montageraum eingespart, sondern auch der Wartungsaufwand reduziert, da technisch aufwändige Riemen und Zahngetriebe entfallen können. Verwendet man Direktantriebe, um Linearbewegungen zu realisieren, so können erhebliche Axialkräfte auf die Lager des Direktantriebes einwirken. Derartige Axialkräfte können mittels Drucklagern abgefangen werden. Bei konventionelle Motorgetriebeeinheiten sind Drucklager im Getriebe bereits integriert.

Entscheidend für die Auswahl eines Antriebs ist in der Regel, dass der Kunde eine komplett fertige Antriebslösung erhält und sich nicht selbst um den Einbau eines Drucklagers kümmern muss. Koppelt man den Rotor des Direktantriebes an die anzutreibende Maschinenwelle direkt an, so wird es erforderlich das Gewicht des Antriebes mittels des Maschinengehäuses abzufangen. Man befestigt das Gehäuse des Direktantriebes hierzu in der Regel an der Maschine und den Rotor des Direktantriebes an der anzutreibenden Maschinenwelle, so dass die Achse des Direktantriebes eine Verlängerung der Maschinenwelle darstellt.

In der Regel ist die Maschinenwelle maschinenseitig mehrfach gelagert. Gleiches gilt für den Rotor des Direktantriebes. Dieser Rotor wird an den Lagerschildern des Motors mittels Festlagern oder Loslagern in radialer und/oder in axialer Richtung fixiert. Realisiert man mittels des Direktantriebes einen Linearantrieb, so verwendet man in der Regel Loslager, um eine axiale Beweglichkeit des Rotors mit der Maschinenwelle zu ermöglichen. Verbindet man nun, wie im Stand der Technik üblich, die mehrfach gelagerte Rotorwelle mit der mehrfach gelagerten Maschinenwelle und verbindet man anschließend das Maschinengehäuse fest mit dem Motorgehäuse, so erhält man eine Anordnung, welche hinsichtlich der radialen Lagerung der Maschinenwelle und der Motorwelle überbestimmt ist, weil die sich nun aus der Maschinenwelle und der Rotorwelle ergebende durchgehende mechanisch steife Welle mittels mehrerer Lager sowohl mittels des Maschinengehäuses als auch mittels des Motorgehäuses radial fixiert ist. Bei einer solchen Anordnung besteht das Problem darin, dass sich beispielsweise aufgrund unterschiedlicher Ausdehnungskoeffizienten der verwendeten Materialien oder aufgrund geringfügiger Toleranzen, insbesondere bei starken Temperaturschwankungen, diese Toleranzen derartig ungünstig aufsummieren können, dass die Lager sowohl maschinenseitig als auch motorseitig über die üblichen Maßen hinaus beansprucht werden und vorzeitig ausfallen können. Dies kann zum Stillstand von Fertigungsanlagen und damit verbundenen hohen Kosten für den Maschinenbetreiber führen. Auch die Wartungskosten für Maschine und Motor steigen dadurch an. Die Kräfte, welche auf die Lager einwirken können, werden auch aufgrund von Fehlern in Verbindung mit der Zentrierung, der Passung, der Koaxialität usw. herbeigeführt. Das schwächste Lager (Kunden - oder Komponentenseitig) wird dann mit sehr hoher Wahrscheinlichkeit vor Ende der üblichen Lebensdauer ausfallen.

Die DE 197 26 017 A1 offenbart einen Elektromotor zum Antrieb einer Arbeitsmaschine. Der Elektromotor umfasst eine rohrförmige Motorwelle und ein diese durchgreifendes Halteelement zur Aufnahme der Querkräfte. Für eine platzsparende Konstruktion und für eine kostengünstige Herstellung ist die rohrförmige Motorwelle mit Gleitlagern an dem Halteelement gelagert, und die Gleitlager umgreifen den Außenumfang der Motorwelle sowie den Außenumfang des Halteelementes zumindest abschnittsweise von radial außen.

Es ist daher die Aufgabe der Erfindung einen Direktantrieb zu konstruieren, welcher dieser mechanischen Überbestimmung vorbeugt und gleichzeitig das kundenfreundliche Direktantriebskonzept beibehält.

Diese Aufgabe wird gelöst mittels eines Hohlwellenmotors zur Ankopplung an die Welle einer Maschine, insbesondere einer Spritzgießmaschine, wobei der Hohlwellenmotor einen Stator und einen Hohlwellenrotor umfasst, wobei der Hohlwellenrotor und der Stator koaxial zueinander innerhalb eines Motorgehäuses angeordnet sind und wobei mittels einer ersten Abdeckung des Motorgehäuses ein Anschlussflansch mit zentraler Ausnehmung zur Anordnung des Hohlwellenmotors an der Maschine realisiert ist und wobei der Hohlwellenrotor mittels eines ersten Lagermittels am Motorgehäuse drehbar gelagert ist, wobei die Ausnehmung und/oder der Hohlwellenrotor Mittel umfasst, welche ein zweites Lagermittel bilden, welches derart ausgebildet ist, dass der Hohlwellenrotor in radialer Richtung mittels axialer Verschiebung relativ zur Ausnehmung zentrierbar ist.

Die Erfindung hat den Vorteil, dass aufgrund dieser axialen mechanischen Zentrierbarkeit der erfindungsgemäße Direktantrieb nur ein einziges separates Rotorwellenlager (Längslager) benötigt. Im Auslieferzustand wird nämlich die Rotorwelle mittels dieses Rotorwellenlagers und des mittels der integrierten Zentrierung realisierten zweiten Rotorwellenlagers derart gehalten, dass die auf der Hohlwelle angeordneten Magnete beim Transport nicht beschädigt werden (Aufrechterhaltung des Luftspaltes). Die mechanische Zentrierung wird erst dann durch axiales Verschieben des Motorgehäuses gelöst, wenn die Hohlwelle bereits an der anzutreibenden Maschinenwelle angeflanscht wurde, so dass die ursprünglich aufgrund der mechanischen Zentrierung realisierte Motorwellenlagerung nun durch diese Maschinenwellenanbindung ersetzt wird. Das Lösen der Zentrierung erfolgt automatisch zu dem Zeitpunkt, zu dem das Motorgehäuse in axialer Richtung dem Maschinengehäuse angenähert wird, wo es anschließend mittels Verschraubung oder anderer Befestigungsmittel fixiert wird. Der Zentriermechanismus ist derartig ausgelegt, dass die Motorwelle im demontierten Zustand stets sicher an zwei voneinander entfernten Lagerpunkten fixiert ist und im montierten Zustand innerhalb des Rotors nur mittels einer Lagerstelle und zusätzlich mittels der Maschinenwelle gelagert ist. Es ergibt sich somit die Möglichkeit, den erfindungsgemäßen Direktantrieb sowohl als Bausatzmotor als auch als Komplettmotor zu realisieren.

Die Abstützung des Rotorgewichtes erfolgt im Auslieferzustand am Motorgehäuse und nicht am Stator des Rotors, was Beschädigungen am Stator und/oder Rotor vorbeugt. Im montierten Zustand erfolgt die Abstützung des Rotorgewichtes teilweise am Motorgehäuse (erstes Lagermittel) und teilweise am Maschinengehäuse (Maschinenwelle). Es ist damit sowohl im demontierten als auch im montierten Zustand stets gewährleistet, dass der Luftspalt zwischen Rotor und Stator erhalten bleibt.

Bevorzugt ist das erste Lagermittel des Direktantriebes als ein Loslager realisiert, vorzugsweise in Form eines Wälzlagers oder eines Gleitlagers. Dieses Lagermittel ist an der dem Anschlussflansch mit Ausnehmung gegenüberliegenden Seite des Motorgehäuses angeordnet. Durch die Verwendung des Loslagers kann die zuvor erwähnte axiale Verschiebbarkeit einfach und preiswert realisiert werden.

Besonders bevorzugt handelt es sich bei den Mitteln zur Realisierung des zweiten Lagermittels um Führungsmittel, welche eine mechanische Führung bilden, wobei die Führungsmittel zur Realisierung der Führung am Hohlwellenrotor und an der Ausnehmung des Anschlussflansches derart angeordnet sind, dass diese im Sinne einer axialen Führung und radialen Arretierung, welche bei axialer Bewegung des Hohlwellenrotors greift, zusammenwirken. Diese Art der Rotorwellenführung erleichtert die Herstellung einer mechanisch einfach zu realisierenden axialen Beweglichkeit des Rotors, so dass Abhängig vom Hub der Bewegung eine automatische Zentrierung der Rotorwelle mittels des Motorgehäuse realisierbar ist. Denkbar wäre es auch ein Führungsmittel entweder nur an der Ausnehmung oder an der Rotorwelle vorzusehen.

Vorzugsweise ist der Hohlwellenrotordurchmesser im Bereich des zweiten Lagermittels mit einer zumindest teilweise umlaufenden konischen Durchmessererweiterung und der Ausnehmungsdurchmesser mit einer zumindest teilweise umlaufenden konischen Durchmesserreduzierung versehen. Diese sich gegenüberliegenden ringförmigen Strukturen bewirken bei axialer Verschiebung des Rotors eine Klemmverbindung zwischen Rotor und Anschlussflansch. Die Durchmessererweiterung bzw. Durchmesserreduzierung erfolgt möglichst stufenlos, beispielsweise durch Abschrägungen, welche als Höhenausgleich zwischen beiden Durchmessern dienen. Aufgrund dieser Abschrägung, welche die konische

Form der Durchmessererweiterung bzw. der Durchmesserreduzierung bewirken, kann der Rotor leicht gleitend entlang der Abschrägung verschoben werden. Das Verschieben ist nur möglich bis zu demjenigen Bereich, bei dem der Durchmesser der Erweiterung und der Durchmesser der Reduzierung im wesentlich identisch sind, wodurch eine Klemmwirkung entsteht, welche den Rotor sowohl in radialer Richtung als auch durch Reibschluss bedingt in axialer Richtung fixiert. Die Toleranzen sind hierbei derart bemessen, dass der Hohlwellenrotor zwar für den Transport sicher fixiert ist (Reibschluss), im Rahmen der Montage jedoch stets axial und in Rotationsrichtung beweglich bleibt. Die hierfür aufzuwendenden Kräfte müssen so gering sein, dass diese von einem Monteur aufgebracht werden können, andererseits müssen die hierfür aufzuwendenden Kräfte jedoch so hoch sein, dass eine sichere Arretierung beim Transport stets gewährleistet ist.

Der Anschlussflansch ist mit Befestigungsmitteln versehen, beispielsweise in Form von Bohrungen mit Gewinden, welche von Seiten der Maschine und/oder von Seiten des Motorgehäuses zugänglich sind. Dies hat den Vorteil, dass je nach den örtlichen Gegebenheiten der Monteur des erfindungsgemäßen Direktantriebes Zugang zur Anordnung aus unterschiedlichsten Perspektiven hat.

Vorzugsweise umfasst der Hohlwellenrotor Befestigungsmittel zur Befestigung des Hohlwellenrotors an der Maschinenwelle selbst. Diese Befestigungsmittel sollten von Seiten der Maschine und/oder von Seiten des Motors, insbesondere von Seiten der rohrförmigen Öffnung des Hohlwellenrotors, zugänglich sein. In der Praxis wird es in der Regel so sein, dass ein Zugang nur über die Öffnung des Hohlwellenrotors möglich ist. Derartige Befestigungsmittel könnten beispielsweise Verschraubungen sein, welche am Ende der Hohlwelle des Rotors durch dort angeordnete Bohrungen mittels der Maschinenwelle verbunden werden.

Die Vorteile der erfindungsgemäßen Lösung kommen dann zum Tragen, wenn diese in Verbindung mit einer Maschine, insbesondere einer Spritzgießmaschine, zum Einsatz kommt. Der erfindungsgemäße Direktantrieb in Form eines Hohlwellenmotors treibt mittels des Hohlwellenrotors die Maschinenwelle an und kann in Verbindung mit der Maschinenwelle (z.B. Kugelumlaufspindel) einen Linearantrieb für die Maschine bilden. Dieser so gebildete Linearantrieb ist aufgrund des erfindungsgemäßen Konzeptes leicht zu realisieren. Die Maschine kann raumsparend und kompakt realisiert werden, da das Konzept des Direktantriebes gegenüber herkömmlichen Antriebskonzepten geringeren Bauraum in Anspruch nimmt. Die Maschine wird aus den zuvor genannten Gründen gegenüber herkömmlichen Maschinen mit aus dem Stand der Technik bekannten Direktantrieben ausfallssicherer sein.

Im folgenden wird nun die Montage des Motors im Detail beschrieben. Zur Montage eines erfindungsgemäßen Hohlwellenmotors wird in einem ersten Montageschritt der radial fixierte Hohlwellenrotor an der Maschinenwelle befestigt und in einem zweiten Montageschritt das Motorgehäuse in axialer Richtung zur Maschine hin bewegt, wobei das Motorgehäuse mittels des im Rahmen des ersten Schrittes an der Maschinenwellen befestigten Hohlwellenrotors geführt wird und wobei in einem dritten Montageschritt des Motorgehäuses selbst an der Maschine befestigt wird. Während des ersten Montageschrittes bleibt die Hohlwelle des Motors unverändert in Transportstellung fest mittels der Ausnehmung am Anschlussflansch fixiert. Aufgrund der Toleranzen ist es jedoch möglich, das Motorgehäuse geführt durch die Motorhohlwelle sowohl in axialer als auch in Rotationsrichtung zu bewegen. Diese Tatsache wird dazu verwendet, dass während des zweiten Montageschrittes das Motorgehäuse in Richtung Maschine bewegt werden kann. Bei dieser Bewegung dient der Hohlwellenrotor als Führung für das Motorgehäuse. Da der Hohlwellenrotor bereits mit der Maschinenwelle fest verbunden ist, ist dieser automatisch fixiert und gelagert. In einem letzten Schritt wird das Maschinengehäuse mit dem Motorgehäuse fest verbunden. Motorgehäuse, Maschinengehäuse, Rotor und Maschinenwelle sind damit steif miteinander verbunden. Die Maschinenwelle bildet in Verbindung mit der Motorwelle eine durchgehende Welle, die mittels zumindest zweier Lagermittel drehbar gelagert ist. Das erste Lagermittel befindet sich innerhalb des Motorgehäuses und das zweite Lagermittel befindet sich innerhalb des Maschinengehäuses. Eine Überbestimmung hinsichtlich der Rotorlagerung bezüglich radialer Kräfte wird hierdurch vermieden.

Damit die Bohrungen im Motorgehäuse mit den Bohrungen der Maschine fluchten, wird es gegebenenfalls erforderlich den Hohlwellenrotor oder das Motorgehäuse um die Hohlwellenrotorachse während der Montage zu drehen. Aufgrund der bereits zuvor erwähnten Bemessungen der Toleranzen ist dies ohne weiteres und vor allem ohne die Verwendung mechanischer Hilfsmittel möglich.

Die Demontage des Hohlwellenmotors erfolgt demgemäß in umgekehrter Reihenfolge. In einem ersten Demontageschritt wird das Motorgehäuse von der Maschine gelöst und in einem zweiten Demontageschritt wird das Motorgehäuse in axialer Richtung von der Maschine weg bewegt. Die Führung erfolgt auch hier mittels des Hohlwellenrotors, welcher nach wie vor unverändert mit der Maschinenwelle verbunden ist. Die axiale Bewegung muss so lange erfolgen, bis der Hohlwellenrotor innerhalb des Motorgehäuses radial fixiert ist. Im Rahmen eines dritten Demontageschrittes wird der radial fixierte Hohlwellenrotor über von außen zugängliche Öffnungen der Hohlwelle von der Maschinenwelle gelöst und die gesamte Anordnung von der Maschine abgenommen. Die Rotorwelle ist damit automatisch wieder für Transportzwecke fixiert, so dass die gesamte Vorrichtung, beispielsweise zu Reparaturzwecken oder zu Lagerzwecken, bewegt werden kann. Die Arretierung verhindert, dass die Hohlwelle innerhalb des Motorgehäuses eine radial Bewegungsänderung erfährt, welche den Luftspalt derart reduzieren könnte, dass die an der Rotorwelle angeordneten Permanentenmagnete am Stator aufschlagen und beschädigt werden könnten.

Im Folgenden wird nun anhand verschiedener Zeichnungen eine spezifische Ausführungsform der erfindungsgemäßen Vorrichtung schematisch erläutert. Es handelt sich dabei um nur eine von vielen denkbaren Ausführungsformen. Fachmännische Abwandlungen mit identischer Wirkung, insbesondere hinsichtlich der Realisierung der Arretierung, sind jederzeit denkbar.
Figur 1 zeigt eine erfindungsgemäße Maschine im Längsquerschnitt, wobei es sich hier um den Auslieferzustand handelt.
Figur 2 zeigt den ersten Montageschritt (Montage des Hohlwellenrotors an der Maschinenwelle).
Figur 3 zeigt einen weiteren Montageschritt (Montage des Motorgehäuses am Maschinengehäuse).

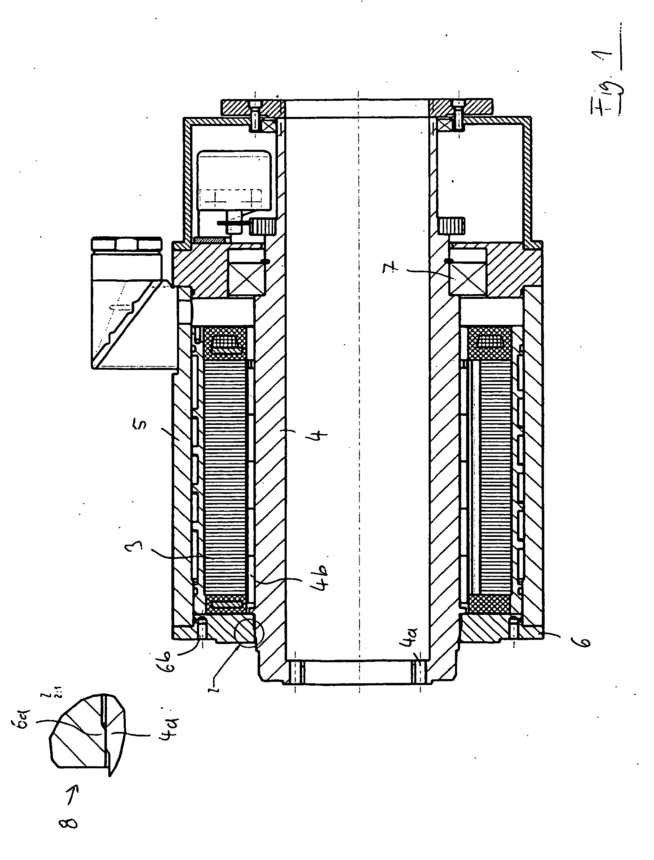

Aus Figur 1 ist der erfindungsgemäße Direktantrieb im Längsschnitt ersichtlich. Dieser Direktantrieb umfasst einen Holwellenrotor 4, welcher maschinenseitig Bohrungen 4A zur Befestigung der Hohlwelle an einer Maschinenwelle umfasst. Diese Hohlwelle 4 trägt an ihrer Oberfläche Permanentmagnete 4B. Konzentrisch um die Hohlwelle ist ein Stator 3 angeordnet, welcher mittels eines Luftspaltes von den Permanentmagneten 4B beabstandet ist. Diesen Luftspalt gilt es unter allen Bedingungen aufrecht zu halten. Dies gilt sowohl für den Transport, als auch während des Betriebes der erfindungsgemäßen Vorrichtung. Hohlwelle 4 und Stator 3 sind innerhalb eines Motorgehäuses 5 angeordnet, wobei das Motorgehäuse 5 maschinenseitig mittels eines Flansches 6 abgedeckt ist. Der Flansch 6 umfasst eine Ausnehmung, welche derart ausgebildet ist, dass die Hohlwelle 4 maschinenseitig aus dem Motorgehäuse 5 herausragen kann. Das Flansch 6 umfasst ebenfalls Befestigungsmittel 6B, beispielsweise Bohrungen mit Gewinde 6B zur Aufnahme von Schrauben oder dergleichen, mittels derer das Motorgehäuse 5 am Maschinengehäuse 2 fest angeordnet werden kann. Die Hohlwelle 4 ist an der dem Flansch 6 gegenüberliegenden Gehäuseseite mittels eines Loslagers 7 drehbar und axial verschiebbar gelagert.

Die maschinenseitige Lagerung 6A,4A der Hohlwelle 4 erfolgt im Auslieferzustand mittels eines Lagermittels 8, welches im Folgendem detaillierter beschrieben wird. Hierzu wird auf die Detailzeichnung Z verwiesen, welche den konstruktiven Aufbau des zweiten Lagermittels 8 detaillierter aufzeigt. Das zweite Lagermittel 8 wird konstruiert mittels Maßnahmen an der ersten Abdeckung 6 und der Hohlwelle 4 realisiert. Hierzu wird die erste Abdeckung 6 mit einer zentralen Ausnehmung (Bohrung) versehen. Diese Bohrung wird im Rahmen der hier gewählten Realisierungsform derart realisiert, dass sich der Bohrungsdurchmesser von der Innenseite des Motorgehäuses 5 aus betrachtet sukzessive verringert. Hierdurch entsteht im Querschnitt betrachtet eine nahezu konische Querschnittsform der Ausnehmung. Es ist auch möglich diese Querschnittsform mittels stufenförmiger Verläufe 6A zu realisieren, wobei zunächst eine durchgehende zentrale Bohrung an der Abdeckung eingebracht wird und anschließend eine Sacklochbohrung mit erhöhtem Bohrungsdurchmesser ebenfalls zentral eingebracht wird. Der Übergang von der ersten zur zweiten Bohrung wird mittels einer Abflachung derart gestaltet, dass ein nahezu stufenloser Übergang von der ersten zur zweiten Bohrung realisierbar ist. Die zweite Komponente des Lagermittels 8 besteht weiterhin aus einem abdeckungsseitig angeordneten veränderten Durchmesser der Hohlwelle 4 ausschließlich im Bereich der Abdeckung 6. Hierbei wird genau umgekehrt wie zuvor beschrieben verfahren. Der Durchmesser der Hohlwelle 4 wird auf Seiten der kundenspezifischen Welle derart reduziert, dass ebenfalls ein stufenförmiger oder konischer Übergang 4A an dem der Maschine zugewandten Hohlwellenende realisiert ist. Die im Detail Z gezeigten Durchmesserveränderungen 6A und 4A bewirken, dass der Hohlwellenrotor 4 in radialer Richtung mittels axialer Verschiebung relativ zur Ausnehmung mittels der. Ausnehmung zentrierbar ist. Die axiale Verschiebbarkeit wird aufgrund der Verwendung eines Loslagers 7 realisiert. Vergleichbare Lösungsansätze mit gleicher Wirkung wären ebenfalls denkbar. Der in Figur 1 gezeigte Motor wird im Rahmen eines ersten Montageschrittes an der Maschinenwelle 1 mittels des Hohlwellenrotors 4 befestigt.

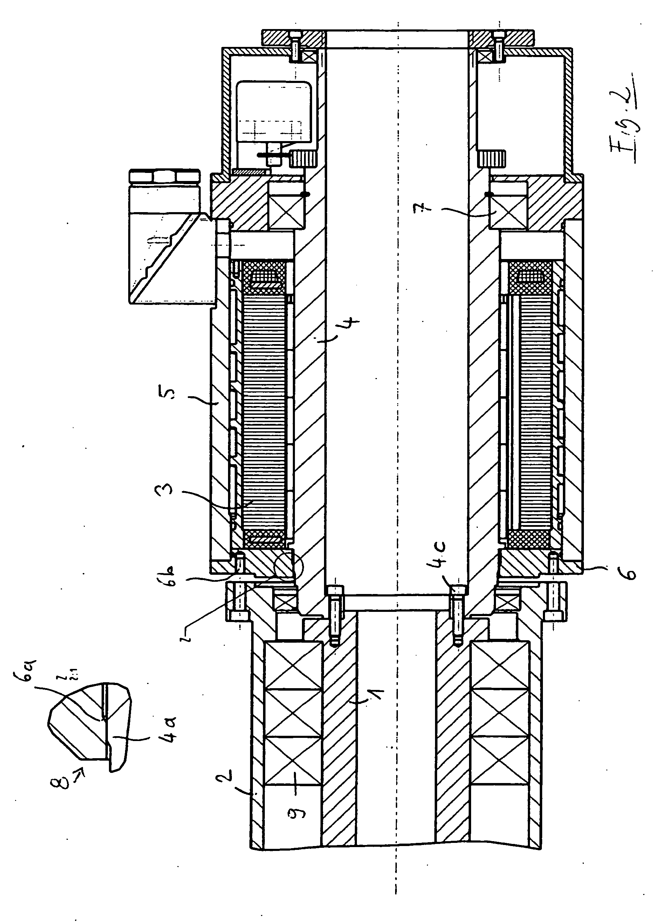

Figur 2 zeigt die an der kundenseitigen Maschinenwelle 1 vormontierte erfindungsgemäße Vorrichtung. Der Hohlwellenrotor 4 ist in dieser Darstellung noch am Stator 5 zentriert. Die Ausführungen bezüglich des Details Z bei Figur 1 gelten auch für diese Figur 2. Ebenso gelten alle anderen Erläuterungen aus Figur 1 für diese Figur 2, weil sich der Motor nach wie vor noch im Auslieferzustand befindet. Der einzige Unterschied zu Figur 1 liegt darin, dass hier der radial fixierte Hohlwellenrotor 4 an der Maschinenwelle 1 angeordnet gezeigt ist. Diese Befestigung erfolgt mittels der Befestigungsmittel 4C, welche beispielsweise Schrauben 4C sein könnten. Die Schrauben wurden durch die Bohrungen an der maschinenseitigen Stirnseite der Hohlwelle 4 geführt und in mit Gewinden versehenen Sacklochbohrungen an der Stirnseite der Maschinenwelle 1 eingeschraubt. Die Hohlwelle 4 des erfindungsgemäßen Hohlwellenmotors ist nun mit der Maschinenwelle 1 steif über die Befestigungsmittel 4C verbunden. Wie aus der Figur 2 deutlich sichtbar ist, wurde jedoch das Gehäuse 5 noch nicht an das Maschinengehäuse 2 angefügt und angeschraubt. Deutlich ist der zwischen dem Anschlussflansch 6 des Gehäuses und der Wandung des Maschinengehäuses 2 noch vorhandene Luftspalt zu sehen.

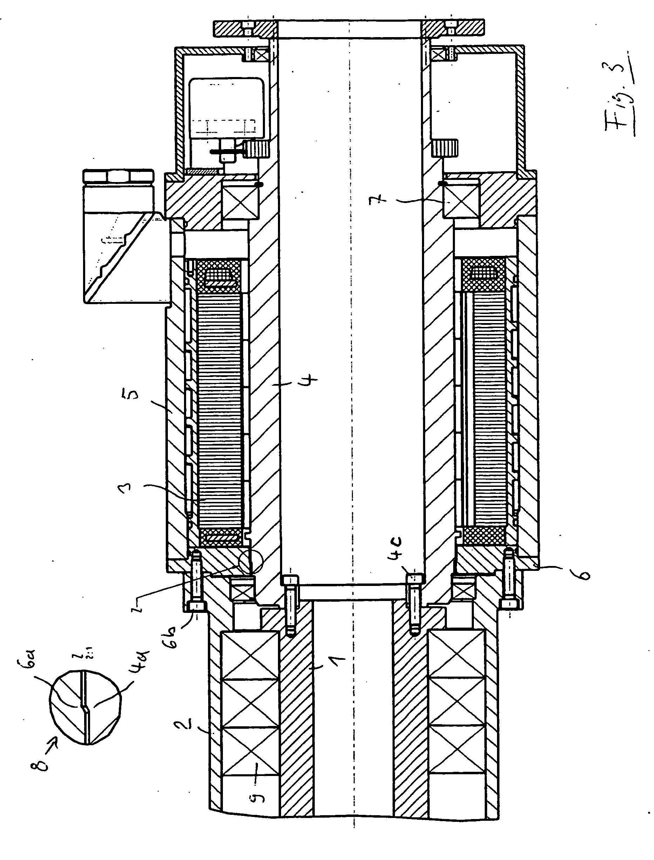

Figur 3 zeigt die erfindungsgemäße elektrische Maschine im fertig montierten Zustand. Die im Detail Z dargestellte Zentrierung wurde mittlerweile durch axiale Verschiebung des Gehäuses 5 in Richtung der Maschine entlang der Hohlwelle 4 gelöst und das Motorgehäuse 5 wurde an die Maschinenwandung vom Monteur angepresst und mittels Verschraubungen 6B steif mit dem Maschinengehäuse verbunden. Wie aus Detail Z deutlich sichtbar ist, wurden die Stufen 6A und 4A gegeneinander verschoben, wodurch sich die Arretierung gelöst hat, so dass nun der Hohlwellenrotor frei drehbar aufgrund der steifen Kopplung mit der Maschinenwelle 1 mittels des maschinenseitigen Lagers 9 und des motorseitigen Lagers 7 gelagert ist. Das zweite Lagermittel 8 hat in dieser Betriebsart keinerlei Funktion mehr, es dient vielmehr lediglich für Transportzwecke bzw. Montagezwecke.

Zum Lösen des Direktantriebes von der Maschine sind die bereits beschriebenen Verfahrensschritte anzuwenden, insbesondere muss die Verschraubung 6B gelöst werden, wobei anschließend das Gehäuse 5 in axialer Richtung geführt mittels der Hohlwelle 4 von der Maschine abgezogen wird, bis die Arretierung 8 greift, anschließend wird die Verschraubung 4C der Hohlwelle 4 gelöst und der Motor kann von der Maschine komplett abgenommen werden. Die Hohlwelle 4 ist dann automatisch auch zentriert und fixiert zum Abtransport des Motors.

## Patentansprüche

1. Hohlwellenmotor zur Ankopplung an die Welle (1) einer Maschine (2), insbesondere einer Spritzgießmaschine, wobei der Hohlwellenmotor einen Stator (3) und einen Hohlwellenrotor (4) umfasst, wobei der Hohlwellenrotor (4) und der Stator (3) koaxial zueinander innerhalb eines Motorgehäuses (5) angeordnet sind und wobei mittels einer ersten Abdeckung (6) des Motorgehäuses (5) ein Anschlussflansch mit zentraler Ausnehmung zur Anordnung des Hohlwellenrotors (4) an der Maschine (2) realisiert ist und wobei der Hohlwellenrotor (4) mittels eines ersten Lagermittels (7) am Motorgehäuse (5) drehbar gelagert ist,
**dadurch gekennzeichnet, dass**
die Ausnehmung und/oder der Hohlwellenrotor (4) Mittel (4a,6a) umfasst, welche ein zweites Lagermittel (8) bilden, welches derart ausgebildet ist, dass der Hohlwellenrotor (4) in radialer Richtung mittels axialer Verschiebung innerhalb der Ausnehmung zentrierbar ist.

2. Hohlwellenmotor nach Anspruch 1, wobei das erste Lagermittel (7) ein Loslager ist und vorzugsweise in Form eines Wälzlagers (7) oder eines Gleitlagers (7) realisiert ist, welches an der dem Anschlussflansch (6) mit Ausnehmung gegenüberliegenden Seite des Motorgehäuses (5) angeordnet ist.

3. Hohlwellenmotor nach einem der vorhergehenden Ansprüche, wobei die Mittel (4a,6a) zur Realisierung des zweiten Lagermittels (8) Führungsmittel sind, welche eine mechanischen Führung bilden, wobei die Führungsmittel zur Realisierung der Führung am Hohlwellenrotor (4) und/oder an der Ausnehmung des Anschlussflansches (6) derart angeordnet sind, dass diese im Sinne einer axialen Führung und radialen Arretierung, welche bei axialer Bewegung des Hohlwellenrotors greift, zusammenwirken.

4. Hohlwellenmotor nach einem der vorhergehenden Ansprüche, wobei der Hohlwellenrotordurchmesser im Bereich des zweiten Lagermittels (8) mit einer zumindest teilweise umlaufenden und konisch verlaufenden Durchmessererweiterung (4a) und der Ausnehmungsdurchmesser mit einer zumindest teilweise umlaufenden und konisch verlaufenden Durchmesserreduzierung (6a) versehen ist.

5. Hohlwellenmotor nach Anspruch 4, wobei die Durchmessererweiterung (4a) und die Durchmesserreduzierung (6a) derart realisiert ist, dass bei axialer Bewegung des Hohlwellenrotors in Richtung des Anschlussflansches (6) eine Fixierung des Hohlwellenrotors (4) in radialer Richtung realisiert ist, wobei die Toleranzen derart bemessen sind, dass der Hohlwellenrotor (4) auch bei Fixierung ohne mechanische Hilfsmittel beweglich bleibt.

6. Hohlwellenmotor nach einem der vorhergehenden Ansprüche, wobei der Anschlussflansch (6) Befestigungsmittel (6b) umfasst, welche von Seiten der Maschine (2) und/oder von Seiten des Motorgehäuses (5) zugänglich sind.

7. Hohlwellenmotor nach einem der vorhergehenden Ansprüche, wobei der Hohlwellenrotor (4) Befestigungsmittel (4c) zur Befestigung des Hohlwellenrotors (4) an der Maschinenwelle (1) umfasst, wobei die Befestigungsmittel (4c) von Seiten der Maschine (2) und/oder von Seiten des Motors (5), insbesondere mittels einer rohrförmigen Öffnung am Hohlwellenrotor (4), zugänglich sind.

8. Maschine, insbesondere Spritzgießmaschine, welche zum Antrieb einer Maschinenwelle (1) einen Hohlwellenmotor nach einem der vorhergehenden Ansprüche umfasst, wobei mittels der Maschinenwelle (1) und dem Hohlwellenmotor ein Linearantrieb für die Maschine realisiert ist.

9. Verfahren zur Montage eines Hohlwellenmotors an eine Maschine, wobei das Verfahren einen Schritt des Bereitstellens eines Hohlwellenmotors nach einem der Ansprüche 1 bis 7 umfasst, wobei in einem ersten Montageschritt der radial fixierte Hohlwellenrotor (4) an der Maschinenwelle (1) befestigt wird und in einem zweiten Montageschritt das Motorgehäuse (5) in axialer Richtung zur Maschine (2) bewegt wird, wobei das Motorgehäuse (5) mittels des im Rahmen des ersten Schrittes an der Maschinenwelle (1) befestigten Hohlwellenrotors (4) geführt wird und wobei in einem dritten Montageschritt das Motorgehäuse (5) an der Maschine (2) befestigt wird.

10. Verfahren nach Anspruch 9, wobei bei der Montage eine Drehung des Hohlwellenrotors (4) oder des Motorgehäuses (5) um die Hohlwellenrotorachse erfolgt.

11. Verfahren zur Demontage eines Hohlwellenmotors von einer Maschine, wobei das Verfahren einen Schritt des Bereitstellens eines Hohlwellenmotors (4) nach einem der Ansprüche 1 bis 7 umfasst, der mit einer Maschine (2) verbunden ist, wobei in einem ersten Demontageschritt das Motorgehäuse (5) von der Maschine (2) gelöst wird und in einem zweiten Demontageschritt das Motorgehäuse (5) in axialer Richtung von der Maschine (2) wegbewegt wird, wobei es mittels des an der Maschinenwelle (1) befestigten Hohlwellenrotors (4) solange geführt wird, bis der Hohlwellenrotor (4) innerhalb des Motorgehäuses (5) radial fixiert ist und wobei in einem dritten Demontageschritt der im Rahmen des zweiten Demontageschrittes radial fixierte Hohlwellenrotor (4) von der Maschinenwelle (1) gelöst wird.

## Claims

1. Hollow-shaft motor for coupling to the shaft (1) of a machine (2), in particular an injection moulding machine, the hollow-shaft motor comprising a stator (3) and a hollow-shaft rotor (4), the hollow-shaft rotor (4) and the stator (3) being arranged coaxially with respect to one another within a motor housing (5), and a connection flange with a central recess for arrangement of the hollow-shaft rotor (4) on the machine (2) being realized by means of a first cover (6) of the motor housing (5), and the hollow-shaft rotor (4) being mounted rotatably on the motor housing (5) by means of a first bearing means (7), **characterized in that** the recess and/or the hollow-shaft rotor (4) comprise/comprises means (4a, 6a) which form a second bearing means (8) which is configured in such a way that the hollow-shaft rotor (4) can be centred in the radial direction by means of axial displacement within the recess.

2. Hollow-shaft motor according to Claim 1, the first bearing means (7) being a floating bearing and preferably being realized in the form of an antifriction bearing (7) or a plain bearing (7) which is arranged on that side of the motor housing (5) which lies opposite the connection flange (6) with a recess.

3. Hollow-shaft motor according to one of the preceding claims, the means (4a, 6a) for realizing the second bearing means (8) being guide means which form a mechanical guide, the guide means for realizing the guide being arranged on the hollow-shaft rotor (4) and/or on the recess of the connection flange (6) in such a way that they interact in the sense of an axial guide and radial locking means which acts in the case of an axial movement of the hollow-shaft rotor.

4. Hollow-shaft motor according to one of the preceding claims, the hollow-shaft rotor diameter being provided, in the region of the second bearing means (8), with an at least partially circumferential and conically running diameter enlargement (4a) and the recess diameter being provided with an at least partially circumferential and conically running diameter reduction (6a).

5. Hollow-shaft motor according to Claim 4, the diameter enlargement (4a) and the diameter reduction (6a) being realized in such a way that, in the case of an axial movement of the hollow-shaft rotor in the direction of the connection flange (6), fixing of the hollow-shaft rotor (4) in the radial direction is realized, the tolerances being dimensioned in such a way that the hollow-shaft rotor (4) remains movable even in the case of fixing without mechanical auxiliary means.

6. Hollow-shaft motor according to one of the preceding claims, the connection flange (6) comprising fastening means (6b) which are accessible from the side of the machine (2) and/or from the side of the motor housing (5).

7. Hollow-shaft motor according to one of the preceding claims, the hollow-shaft rotor (4) comprising fastening means (4c) for fastening the hollow-shaft rotor (4) to the machine shaft (1), the fastening means (4c) being accessible from the side of the machine (2) and/or from the side of the motor (5), in particular by means of a tubular opening on the hollow-shaft rotor (4).

8. Machine, in particular injection moulding machine, which comprises a hollow-shaft motor according to one of the preceding claims for driving a machine shaft (1), a linear drive for the machine being realized by means of the machine shaft (1) and the hollow-shaft motor.

9. Method for mounting a hollow-shaft motor on a machine, the method comprising a step of providing a hollow-shaft motor according to one of Claims 1 to 7, the radially fixed hollow-shaft rotor (4) being fastened to the machine shaft (1) in a first mounting step, and the motor housing (5) being moved in the axial direction with respect to the machine (2) in a second mounting step, the motor housing (5) being guided by means of the hollow-shaft rotor (4) which is fastened to the machine shaft (1) in the context of the first step, and the motor housing (5) being fastened to the machine (2) in a third mounting step.

10. Method according to Claim 9, a rotation of the hollow-shaft rotor (4) or the motor housing (5) taking place about the hollow-shaft rotor axis during mounting.

11. Method for dismantling a hollow-shaft motor from a machine, the method comprising a step of providing a hollow-shaft motor (4) according to one of Claims 1 to 7 which is connected to a machine (2), the motor housing (5) being detached from the machine (2) in a first dismantling step, and the motor housing (5) being moved away in the axial direction from the machine (2) in a second dismantling step, the said motor housing (5) being guided by means of the hollow-shaft rotor (4) which is fastened to the machine shaft (1), until the hollow-shaft rotor (4) is fixed radially within the motor housing (5), and the hollow-shaft rotor (4) which is fixed radially in the context of the second dismantling step being detached from the machine shaft (1) in a third dismantling step.

## Revendications

1. Moteur à arbre creux pour l'accouplement à l'arbre (1) d'une machine (2), en particulier d'une machine de moulage par injection, le moteur à arbre creux comportant un stator (3) et un rotor à arbre creux (4), le rotor à arbre creux (4) et le stator (3) étant disposés de manière coaxiale l'un par rapport à l'autre à l'intérieur d'un carter de moteur (5) et une bride de raccordement dotée d'un évidement central pour la disposition du moteur à arbre creux (4) sur la machine (2) étant réalisée au moyen d'un premier couvercle (6) du carter de moteur (5), et le rotor à arbre creux (4) étant monté rotatif sur le carter de moteur (5) au moyen d'un premier moyen de palier (7),
**caractérisé en ce que**
l'évidement et/ou le rotor à arbre creux (4) comportent des moyens (4a, 6a) qui forment un deuxième moyen de palier (8) qui est réalisé de telle sorte que le rotor à arbre creux (4) peut être centré dans la direction radiale au moyen d'un déplacement axial à l'intérieur de l'évidement.

2. Moteur à arbre creux selon la revendication 1, dans lequel le premier moyen de palier (7) est un palier libre et est réalisé de préférence sous la forme d'un palier à roulement (7) ou d'un palier lisse (7) qui est disposé du côté du carter de moteur (5) qui est opposé à la bride de raccordement (6) dotée de l'évidement.

3. Moteur à arbre creux selon l'une quelconque des revendications précédentes, dans lequel les moyens (4a, 6a) pour la réalisation du deuxième moyen de palier (8) sont des moyens de guidage qui forment un guidage mécanique, les moyens de guidage pour la réalisation du guidage étant disposés sur le rotor à arbre creux (4) et/ou sur l'évidement de la bride de raccordement (6) de telle sorte qu'ils coopèrent au sens d'un guidage axial et d'un blocage radial qui s'engage lors du déplacement axial du rotor à arbre creux.

4. Moteur à arbre creux selon l'une quelconque des revendications précédentes, dans lequel le diamètre du rotor à arbre creux dans la région du deuxième moyen de palier (8) est pourvu d'un élargissement de diamètre (4a) au moins partiellement périphérique et s'étendant de manière conique et le diamètre de l'évidement est pourvu d'une réduction de diamètre (6a) au moins partiellement périphérique et s'étendant de manière conique.

5. Moteur à arbre creux selon la revendication 4, dans lequel l'élargissement de diamètre (4a) et la réduction de diamètre (6a) sont réalisés de telle sorte que, lors d'un déplacement axial du rotor à arbre creux en direction de la bride de raccordement (6), une fixation du rotor à arbre creux (4) soit réalisée dans la direction radiale, les tolérances étant dimensionnées de telle sorte que le rotor à arbre creux (4) reste mobile même en cas de fixation sans moyen mécanique auxiliaire.

6. Moteur à arbre creux selon l'une quelconque des revendications précédentes, dans lequel la bride de raccordement (6) comporte des moyens de fixation (6b) qui sont accessibles à partir de côtés de la machine (2) et/ou à partir de côtés du carter de moteur (5).

7. Moteur à arbre creux selon l'une quelconque des revendications précédentes, dans lequel le rotor à arbre creux (4) comporte des moyens de fixation (4c) pour la fixation du rotor à arbre creux (4) à l'arbre de machine (1), les moyens de fixation (4c) étant accessibles à partir de côtés de la machine (2) et/ou à partir de côtés du moteur (5), en particulier au moyen d'une ouverture tubulaire sur le rotor à arbre creux (4).

8. Machine, en particulier machine de moulage par injection, qui comporte une moteur à arbre creux selon l'une quelconque des revendications précédentes pour l'entraînement d'un arbre de machine (1), un entraînement linéaire pour la machine étant réalisé au moyen de l'arbre de machine (1) et du moteur à arbre creux.

9. Procédé de montage d'un moteur à arbre creux sur une machine, le procédé comportant une étape de fourniture d'un moteur à arbre creux selon l'une quelconque des revendications 1 à 7, le moteur à arbre creux (4) fixé radialement étant fixé à l'arbre de machine (1) lors d'une première étape de montage et le carter de moteur (5) étant déplacé par rapport à la machine (2) dans la direction axiale lors d'une deuxième étape de montage, le carter de moteur (5) étant guidé au moyen du rotor à arbre creux (4) fixé à l'arbre de machine (1) dans le cadre de la première étape et le carter de moteur (5) étant fixé à la machine (2) lors d'une troisième étape de montage.

10. Procédé selon la revendication 9, dans lequel, lors du montage, une rotation du rotor à arbre creux (4) ou du carter de moteur (5) autour de l'axe du rotor à arbre creux a lieu.

11. Procédé de démontage d'un moteur à arbre creux d'une machine, le procédé comportant une étape de fourniture d'un moteur à arbre creux (4) selon l'une quelconque des revendications 1 à 7, lequel est relié à une machine (2), le carter de moteur (5) étant détaché de la machine (2) lors d'une première étape de démontage et le carter de moteur (5) étant déplacé à l'écart de la machine (2) dans la direction axiale lors d'une deuxième étape de démontage, lequel est guidé au moyen du rotor à arbre creux (4) fixé à l'arbre de machine (1) jusqu'à ce que le rotor à arbre creux (4) soit fixé radialement à l'intérieur du carter de moteur (5) et le rotor à arbre creux (4) fixé radialement dans le cadre de la deuxième étape de démontage étant détaché de l'arbre de machine (1) lors d'une troisième étape de démontage.
